# NEW EUROPEAN PATENT SPECIFICATION

(11) **EP 1 579 759 B2**
(45) Date of publication and mention of the opposition decision: **21.02.2018**
(45) Mention of the grant of the patent: 13.02.2008
(21) Application number: 05075618.8
(22) Date of filing: 14.03.2005
(51) Int. Cl.: A01J 7/02, A01J 5/08

(54) **A method of milking a dairy animal**
Verfahren zum Melken eines Milchtieres
Méthode pour traire un animal laitier

(30) Priority: 26.03.2004 NL 1025819
(43) Date of publication of application: 28.09.2005
(73) Proprietor: Lely Enterprises AG, 6300 Zug (CH)
(72) Inventor: Mostert, Gerard, 3181 WV Rozenburg (NL); Meijer, Eduard Lodewijk, 2514 HL Den Haag (NL); Van Leeuwen, Alexander Adrianus, 2624 BC Delft (NL); Klee, Tjark Onno, 3232 AP Brielle (NL); Fransen, Renatus Ignatius Josephus, 3135 ZD Vlaardingen (NL)
(74) Representative: Octrooibureau Van der Lely N.V.

(56) References cited:
- EP-A- 1 234 496
- EP-A1- 1 388 281
- EP-A2- 0 682 862
- EP-A2- 1 219 167
- WO-A-03/077645
- WO-A1-2004/004791
- GB-A- 447 629
- GB-A- 629 017
- GB-A- 911 701
- US-A- 2 226 946
- US-A- 2 228 520
- US-A- 2 616 809
- US-A- 4 222 346
- US-A- 5 881 669
- US-A- 5 913 281
- US-B1- 6 598 560
- US-B1- 6 619 227

## Description

The invention relates to a method of milking a dairy animal according to the characterizing part of claim 1.

Such a method of milking a dairy animal are known from patent application WO 03/077645.

This patent application describes, in the context of disinfection, the application of steam that is sufficiently hot for heating at any rate at least a part of a teat liner to a temperature at which micro-organisms and bacteria are killed or eliminated. The disinfection and/or sterilisation should preferably comprise the whole inner part of a teat liner. The cleaning methods described in this patent consist of the following characterizing steps: removing milk or other residues that are present on at least the teat liner by means of a cleaning fluid, removing the cleaning fluid, and disinfecting at any rate at least a part of the teat liner with steam. All cleaning methods begin with the mentioned first step. Applying both a cleaning fluid and a disinfecting fluid for cleaning, respectively disinfecting a teat liner implies a relatively large consumption of fluids and energy.

Patent US 5,881,669 describes an apparatus and a method for rinsing and cleaning lines in which milk has flowed in a system for milking animals. The circuit of the system includes a tank for heating water, a jet rinser for each teat cup and a line from each teat cup to a common milking jar. A pre-rinsing is done with water of about 37° C. After pre-rinsing, during a certain time, hot water of preferably more than 80° or steam is fed through the circuit. All supply lines are controlled by a computer.

It is an object of the invention to obviate the aforementioned drawback at any rate at least partially. To this end, the method mentioned in the preamble comprises the features of the characterizing part of claim 1. The invention is based on the insight that a cleaning method that begins with disinfection by means of steam is also able to remove milk or other residues that are present on at any rate at least a part of the teat liner. This enables saving of at least means and energy.

According to the invention, the very first cleaning step takes place after the milking of the animal has finished. This means that at any rate at least a part of a teat liner is exposed to steam. All causers of udder diseases and udder infections on at any rate at least a part of the teat liner have now been eliminated. After disinfecting at any rate at least a part of the teat liner with the steam, residues that are present on at any rate at least a part of the teat liner are removed by means of a fluid. Therefore, in an embodiment of a device but not according to the invention, the disinfection device comprises a cleaning device for removing residues by means of a fluid. As a fluid may be applied, for example, water, air, a mix of water and air, or water with a chemical cleaning substance added thereto. The pressure of the steam and/or the cleaning fluid is capable of being regulated and determined.

In an embodiment of a method according to the invention, the further cleaning step is the second cleaning step.

Cooling and cleaning of at any rate at least a part of a teat liner can be achieved by passing fluids through the teat liner. Flushing with water forms a simple and energy-technically favourable method. The temperature of the water is capable of being regulated. A possibly still moist teat liner easily slides over a teat of a next dairy animal to be milked during the connection of a teat cup containing a teat liner.

In this context, additionally applying compressed air or sucking in air through the teat liner by means of the vacuum pump present in a milking system is, in principle, also possible. An advantage of the latter method relative to applying compressed air is the faster evaporation of condensate on a teat liner by the locally created low pressure in the proximity of a teat liner surface. The temperature of the compressed air is capable of being regulated.

In an embodiment of a method according to the invention, the further cleaning step is performed with a liquid, after which a subsequent cleaning step, which is preferably the third cleaning step, is performed with a gas, or vice versa.

As soon as a sufficiently low teat liner temperature has been attained and determined, the connection of the teat cup to a next dairy animal to be milked can start. In an embodiment of a method according to the invention, the temperature of the fluid is chosen in such a way that the part of the milking device that has been treated with steam, is cooled by the fluid.

An embodiment of a method according to the invention comprises the step of heating water to steam and the step of bringing the steam into contact with at any rate at least a part of the teat liner, the step of heating the steam comprising the step of heating the steam to such a temperature that the steam has a temperature of at least approximately 95 °C when it is in contact with at any rate at least a part of the teat liner. The disinfection with steam proposed in patent WO 03/077645 does not specify which steam temperatures can be taken into account. This implies a too great uncertainty as regards the temperature of the steam that is in contact with the teat liners. By prescribing a temperature of ≥ 95 °C of the steam that is in contact with a specific area of the milking device, i.e. at least a part of the teat liners, there is obtained a great certainty that the desired disinfection will actually be achieved with the desired parameters.

By control with the aid of temperature measuring means and feed back regulation of a heating device for heating a disinfecting fluid, the temperature mentioned, or another desired temperature, will be achieved. Registering values of at least one control parameter for the control unit of the disinfection device is indispensable for a proper control of the actions performed during disinfecting.

Therefore, an embodiment of a method according to the invention comprises the step of registering values of at least one control parameter for the disinfection device. Control parameters are those parameters by which a disinfection treatment is determined, such as, for example, the duration of operation of the disinfection device, the amount of steam, the rate of flow of the steam, the pressure of the steam, etc.

Besides, it is pointed out that, apart from the frequently mentioned conversion from water into steam, also the conversion from a liquid fluid, comprising substantially water, into a gaseous fluid, comprising substantially steam, can be taken into consideration.

The temperature range for attaining a complete disinfection of at any rate at least a part of the teat liners, in which the causers of udder diseases and udder infections are killed, lies approximately between 100 °C and 180 °C. In view of inter alia the fact that a disinfection that eliminates causers of udder diseases and udder infections is in principle adequate, and in view of the thermal loadability of a teat liner and the intensive elastic deformations of a teat liner under operating conditions, a range between 100 °C and 150 °C may be chosen as a practical, active temperature range for steam disinfection of at any rate at least a part of the teat liners. Additionally, it is pointed out that steam is only one of a plurality of disinfecting fluids that can be taken into consideration.

Furthermore, the aforementioned patent does not propose measuring means for checking the temperature of the steam with which at any rate at least a part of a teat liner is brought into contact. Uncertainty as regards the temperature of a disinfecting fluid, in this case steam, resulting in uncertainty as regards the effectiveness of a disinfection treatment, is the undesired consequence.

In an embodiment of a method according to the invention, the method comprises the step of heating water to steam and the step of bringing the steam into contact with the teat liner, and in that the step of heating the water to steam comprises the step of heating the steam to such a temperature that at any rate at least a part of the teat liner is capable of being heated by the steam to a temperature of at least approximately 95 °C.

In an embodiment of a method according to the invention, the method comprises the step of heating water to steam and the step of bringing the steam into contact with the teat liner, the step of heating the water to steam comprising the step of heating the steam to such a temperature that the steam has a temperature between approximately 100 °C and approximately 150 °C when the steam is in contact with at any rate at least a part of the teat liner.

In an embodiment of a method according to the invention, the method comprises the step of heating water to steam and the step of bringing the steam into contact with the teat liner, the step of heating the water to steam comprising the step of heating the steam to such a temperature that at any rate at least a part of the teat liner is capable of being heated by the steam to a temperature between approximately 100 °C and approximately 150 °C.

In an embodiment of a method according to the invention, the fluid contains a chemical cleaning substance.

In an embodiment of a method according to the invention, if the further cleaning step is performed with the chemical cleaning substance, a subsequent cleaning step, which is now the third cleaning step, is performed with water, and, if desired, as a following step, a cleaning step is performed with a gas.

In an embodiment of a method according to the invention, the milking device comprising a disinfection device with a heating device for heating water to steam, the disinfection device being suitable for bringing the steam into contact with a teat liner, and the milking device comprising a control unit which is suitable for controlling the disinfection device, the method comprises the step of controlling the disinfection device with the aid of a first regulation parameter.

In an embodiment of a method according to the invention, the first regulation parameter is a control parameter.

In an embodiment of a method according to the invention, the method comprises the step of registering values of at least one control parameter for the disinfection device.

In an embodiment of a method according to the invention, the control parameter is time-dependent.

In an embodiment of a method according to the invention, the control parameter is the duration of operation, and the method comprises the step of putting the disinfection device into operation by the control unit.

In an embodiment of a method according to the invention, the control parameter is the amount of steam, and the method comprises the step of putting the disinfection device into operation by the control unit.

In an embodiment of a method according to the invention, the method comprises the step of putting the disinfection device out of operation by the control unit when a threshold value is exceeded.

In an embodiment of a method according to the invention, the threshold value is an adjustable threshold value.

In an embodiment of a method according to the invention, the threshold value amounts to between approximately 2 and approximately 5 minutes.

In an embodiment of a method according to the invention, the method comprises the step of releasing the steam by a release device, the step of putting the release device into operation, and the step of putting the release device out of operation when a threshold value is exceeded.

In an embodiment of a method according to the invention, the threshold value amounts to between approximately 3 and approximately 15 seconds.

In an embodiment of a method according to the invention, the method comprises the step of determining the identity of an animal, and the step of controlling the disinfection device partially with the aid of the determined animal identity.

In an embodiment of a method according to the invention, the method comprises the step of actively cooling at any rate at least a part of the teat liner.

In an embodiment of a method according to the invention, the method comprises the step of controlling the disinfection device with the aid of a second regulation parameter.

In an embodiment of a method according to the invention, the second regulation parameter is an adjustable threshold value.

In an embodiment of a method according to the invention, the second regulation parameter has an animal-dependent value.

In an embodiment of a method according to the invention, the method comprises the step of measuring the temperature of the steam that is in contact with at any rate at least a part of the teat liner, the step of generating a first temperature signal that is indicative of the measured steam temperature, and the step of supplying the first temperature signal to the control unit.

In an embodiment of a method according to the invention, the method comprises the step of measuring the temperature of at any rate at least a part of the teat liner, the step of generating a second temperature signal that is indicative of the measured teat liner temperature, and the step of supplying the second temperature signal to the control unit.

In an embodiment of a method according to the invention, the teat liner being made of elastic material, the method comprises the step of measuring a displacing behaviour of at any rate at least a part of the teat liner.

In an embodiment of a method according to the invention, the teat liner comprising a teat receiving aperture and a milk discharge aperture, the method comprises the step of displacing the temperature measuring member to a position above the teat receiving aperture of a teat liner.

In an embodiment of a method according to the invention, the teat liner comprising a teat receiving space for receiving a teat of a dairy animal, the teat receiving space being the space in a teat liner between the teat receiving aperture and the milk discharge aperture of a teat liner, the method comprises the step of inserting the temperature measuring member into the teat receiving space of a teat liner.

In an embodiment of a method according to the invention, the temperature measuring member is an infrared sensor or an air flow sensor.

In an embodiment of a method according to the invention, the method comprises the step of controlling, with the aid of a desired steam temperature of the steam that is in contact with the teat liner, the heating device for heating the steam in such a way that the steam that is in contact with at any rate at least a part of the teat liner is capable of being heated to the desired steam temperature.

In an embodiment of a method according to the invention, the method comprises the step of controlling, with the aid of a desired teat liner temperature of the part of a teat liner that is in contact with the steam, the heating device for heating the steam in such a way that at least the part of the teat liner that is in contact with the steam is capable of being heated to the desired teat liner temperature.

In an embodiment of a method according to the invention, the method comprises the step of comparing the measured temperature with the desired temperature, the step of generating a comparison signal that is indicative of the comparison result, the step of supplying the comparison signal to the control unit, and the step of controlling, with the aid of said comparison signal, the heating device by the control unit in such a way that the desired temperature is attainable.

In an embodiment of a method according to the invention, the milking device also being provided with a detection device for detecting physical and/or chemical abnormalities in milk secreted by a dairy animal, the method comprises the step of controlling the disinfection device with the aid of data from the detection device.

In an embodiment of a method according to the invention, the method comprises the step of automatically connecting a teat cup to a teat of a dairy animal by means of a robot arm.

In an embodiment of a method according to the invention, the method comprises the step of controlling the robot arm for automatically connecting a teat cup to a teat of a dairy animal when a parameter value comes below an adjustable threshold value for the second temperature signal and the disinfection device is out of operation.

In an embodiment of a method according to the invention, the threshold value for the second temperature signal is approximately 40 °C.

In an embodiment of a method, the teat liner comprising a teat receiving aperture and a milk discharge aperture and the milk discharge aperture being in connection with a foremilk discharge device, the method comprises the step of displacing the steam in a direction from the teat receiving aperture to the milk discharge aperture in such a way that the steam gets into the foremilk discharge device.

In an embodiment of a method, the method comprises the step of moving the teat liner in a pulsating manner when the steam is being brought into contact with at any rate at least the teat liner.

A further method is a method of milking a dairy animal which comprises the step of disinfecting at any rate at least a part of a teat liner by heating the teat liner, the disinfection being performed by a disinfection device that is controlled by a control unit, the teat liner is heated directly, and at any rate at least a part of the teat liner attains a temperature of at least approximately 95 °C.

In an embodiment of a method, the last method comprises the step of registering values of at least one control parameter for the disinfection device.

A corresponding device for milking a dairy animal, comprising a teat cup with a teat liner, and a disinfection device for disinfecting at any rate at least a part of the teat liner with steam, the disinfection device comprising a heating device for heating the water to steam, and the disinfection device being suitable for bringing the steam into contact with the teat liner, and comprising a control unit which is suitable for controlling the disinfection device, the heating device being suitable for heating the water to steam to such a temperature that the steam has a temperature of at least approximately 95 °C when it is in contact with the teat liner. In an embodiment of this device, the control unit is suitable for registering values of at least one control parameter for the disinfection device.

The causers of udder diseases and udder infections that are present on at any rate at least a part of a teat liner are at least eliminated if the relevant surfaces of a teat liner attain a sufficiently high temperature during the disinfection. Therefore, in an embodiment of a device, the heating device is suitable for heating water to steam to such a temperature that at any rate at least a part of the teat liner is capable of being heated by the steam to a temperature of at least approximately 95°.

In view of the not unlimited thermal loadability of a teat liner and an adequate disinfection result, an embodiment of a device in which the heating device is suitable for heating water to steam to such a temperature that at any rate at least a part of the teat liner is capable of being heated by the steam to a temperature between approximately 100 °C and approximately 150 °C is a good compromise.

Under the current, usual milking conditions the aforementioned device is capable of effecting the adequate, desired disinfection. However, it is well possible that the development in teat liner materials leads to materials that are fairly temperature-insensitive. Poor conduction of heat through the teat liner material is undesirable. In that case, exposure of teat liners to hot disinfecting fluids will not lead to the high teat liner temperatures that have to be obtained for a successful disinfection. This is the underlying idea of an embodiment of the inventive idea, in which the heating device is suitable for heating water to steam to such a temperature that the steam has a temperature between approximately 100°C and approximately 150 °C when the steam is in contact with at any rate at least a part of the teat liner.

It may be desirable to apply particular cleaning fluids, for example water plus a chemical cleaning substance added thereto. In this context, an acid or a base can be taken into consideration.

In an embodiment of a device, means are present for that purpose. The disinfection device comprises a cleaning device for removing, by means of a chemical cleaning substance, milk and/or other residues that are present on at any rate at least a part of the teat liner.
Now, chemical cleaning substance residues that remain present on at any rate at least a part of the teat liner first have to be removed, for example with water, before a next milking can take place.

In an embodiment of a device, the disinfection device comprises means for removing the chemical cleaning substance that is present on at any rate at least a part of the teat liner.

In an embodiment of a device, the control unit that controls the disinfection device is suitable for controlling the disinfection device with the aid of a first regulation parameter. As a first regulation parameter for controlling the disinfection device a control parameter may be chosen. By registering values of at least one control parameter and controlling the disinfection device with the aid of these control parameter values, feedback regulation of disinfection process parameters is possible. There is thus obtained a firmer grip on a correct performance of the disinfection procedure.

In an embodiment of a device, the control parameter is time-dependent.

In an embodiment of a device, the control unit is suitable for putting the disinfection device into operation and the control parameter is a time-dependent parameter, such as, for example, the duration of operation. The amount of released steam may also be chosen as a control parameter.

In an embodiment of a device, the control unit is suitable for putting the disinfection device out of operation when a threshold value is exceeded. This threshold value may be an adjustable threshold value. In the case that the milking system and in particular the teat liners are cleaned with water, a mix of water and air, or water with a chemical cleaning substance added thereto, a threshold value in the range between approximately 2 and 5 minutes may be chosen.

In an embodiment of a device, the disinfection device comprises a release device for releasing the steam, the control unit being suitable for putting the release device into operation and for putting the release device out of operation when a threshold value is exceeded. By registering values of at least one control parameter and by putting the release device of the disinfection device out of operation when it is established that a threshold value is exceeded, a proper protection against thermal overload of the teat liners is achieved. Putting the release device out of operation in time is absolutely necessary from a point of view of security. Also from an environmental point of view it is desirable that the release device is put out of operation in time.

In an embodiment of a device, the threshold value at which the release device is put out of operation has a time-dependent value, in particular a span of time. When applying steam as a disinfecting fluid, the threshold value can be between approximately 3 seconds and approximately 15 seconds; when applying water and chemical substances, a threshold value of approximately 1 minute can be taken into consideration.

In an embodiment of a device, the milking device comprises an animal identification system for determining the identity of an animal and for supplying an animal identification signal to the control unit, the control unit controlling the disinfection device at least partially with the aid of the animal identification signal. An animal related disinfection and/or cleaning treatment of at any rate at least a part of the teat liner is thus possible.

In an embodiment of a device, the disinfection device of the milking device comprises a cooling device for actively cooling at any rate at least a part of the teat liner. After having been exposed to a hot disinfecting fluid, a teat liner has to be cooled before it is possible to connect the teat liner again to a teat of a dairy animal. In an embodiment of a device, the cooling device comprises a vacuum pump, but it is also possible to effect an adequate cooling with compressed air or water. In an embodiment of a device, there are provided technical means for applying the aforementioned fluids. The cooling device is capable of being controlled by the control unit, partially by the possibility of inputting a regulation parameter value for the cooling device. This regulation parameter value may be, for example, a span of time during which cooling has to take place, a desired final cooling temperature, etc. The cooling intensity is thus inputted.

In an embodiment of a device, the control unit comprises an input device for inputting a second regulation parameter for controlling the disinfection device. Said second regulation parameter may relate, for example, to an adjustable threshold value or an animal-dependent value. The second regulation parameter can be a control parameter of the desinfection device.

Measuring the temperature of the steam that is in contact with the teat liner is necessary for being able to control the disinfection process. By supplying the measurement data to the control unit it is possible to store these data and to process them for the purpose of feedback regulation of the heating device for the steam. There is thus obtained a closed control loop, which increases the reliability of a successful disinfection to a great extent. In an embodiment of a device, the disinfection device is provided for that purpose with a first temperature measuring member for measuring the temperature of the steam that is in contact with at any rate at least a part of the teat liner, for generating a first temperature signal that is indicative of the measured steam temperature and for supplying the first temperature signal to the control unit.

In an embodiment of a device, the disinfection device is provided with a second temperature measuring member for measuring the temperature of at any rate at least a part of the teat liner, and for generating a second temperature signal that is indicative of the measured teat liner temperature, and for supplying the second temperature signal to the control unit.

In an embodiment of a device, in which the teat liner is made of elastic material, the second temperature measuring member is suitable for measuring a displacing behaviour of at any rate at least a part of the teat liner. The mentioned temperature measuring means may be embedded inter alia in a teat liner, and/or be disposed on a teat liner, and/or be disposed on a teat cup, and/or be embedded in a teat cup.

In an embodiment of a device, in which the teat liner comprises a teat receiving aperture and a milk discharge aperture, the temperature measuring member is located above the teat receiving aperture of a teat liner or is capable of being displaced to said position. An infrared sensor is one of a plurality of temperature measuring means that may be applied. The temperature measuring member (or temperature measuring means) may be disposed on a robot arm of the milking device. However, the temperature measuring member may be located as well between the disinfection members 13.

A proper measurement of the temperature of the steam that is in contact with the teat liner or the temperature of the teat liner that is in contact with the steam is obtained if the temperature measuring member is located above the teat liner. A possible constructive embodiment of this idea may result in a temperature measuring member that is positioned above the teat liner, in particular the teat receiving aperture, only at the moment of measuring.

In an embodiment of a device, in which the teat liner comprises a teat receiving space for receiving a teat of a dairy animal and the teat receiving space is the space in a teat liner between the teat receiving aperture and the milk discharge aperture of a teat liner, the temperature measuring member is capable of being inserted into the teat receiving space of a teat liner. The temperature measuring member, for example an infrared sensor or an air flow sensor, is located for example in or on a disinfecting member that is inserted into a teat liner during the disinfection. Measuring in the immediate vicinity of the teat liner surface increases the reliability of the measurement results. It is pointed out that the infrared sensor and/or air flow sensor can also occupy fixed positions in the disinfection device.

A temperature feedback control circuit increases the reliability of the achievement of the desired values of the disinfection process parameters. The now following embodiments result from this basic idea. In an embodiment of a device, the regulation parameter is a desired steam temperature of the steam that is in contact with the teat liner, and the control unit controls, with the aid of the desired steam temperature, the heating device for heating the steam in such a way that steam that is in contact with the teat liner is capable of being heated to the desired steam temperature.

In an embodiment of a device, the regulation parameter is a desired teat liner temperature of the part of a teat liner that is in contact with the steam, and the control unit controls, with the aid of the teat liner temperature, the heating device for heating the steam in such a way that at any rate at least the part of the teat liner that is in contact with the steam is capable of being heated to the desired teat liner temperature.

In an embodiment of a device, the control unit is provided with a comparing device for comparing the measured temperature with the desired temperature, for generating a comparison signal that is indicative of the comparison result and for supplying the comparison signal to the control unit, the control unit controlling, with the aid of said comparison signal, the heating device in such a way that the desired temperature is attainable.

In an embodiment of a device, in which the milking device is also provided with a detection device for detecting physical and/or chemical abnormalities in milk secreted by a dairy animal, the control unit controls the disinfection device with the aid of data from the detection device. Based on a measured/determined milk quality, the control unit is capable of adjusting the disinfection process in an intelligent manner. If, for example, milk with a high somatic cell count is detected, a longer disinfection time or a larger amount of steam is desirable.

In an embodiment of a device, the milking device comprises a robot arm for automatically connecting a teat cup to a teat of a dairy animal.

In an embodiment of a device, the robot arm is capable of being controlled by the control unit for automatically connecting a teat cup to a teat of a dairy animal when a parameter value comes below an adjustable threshold value for the second temperature signal and the disinfection device is out of operation. As a threshold value for the second temperature signal approximately 40 °C may be chosen. As soon as at any rate at least a part of a teat liner has attained such a temperature and this has actually been established, the teat liner is suitable for being connected to the teat of a dairy animal. There is thus created a protection against the connection of teat liners having a too high temperature.

In an embodiment of a device, the disinfection device is provided with an additive member for adding an additive. Before the steam exercises its disinfecting action on at any rate at least a part of the teat liner of a milking device, an indication substance can be applied in a teat liner. After disinfecting, it is possible by measuring, for example, discoloration of the indication substance, with the aid of technical means, whether the intended disinfection has been successful and/or to what extent all the surfaces to be disinfected have actually been disinfected. It is also possible to add, by means of the additive member, an additional disinfecting substance to the steam just before the moment the steam comes into contact with a teat liner surface. This may be desirable because of chemical reactivity of the steam with the additive. In this context, by indication substance and additive are also meant indication fluids and additional fluids. In an embodiment of a device, the additive member is capable of being controlled by the control unit.

In an embodiment of a device, in which the teat liner comprises a teat receiving aperture and a milk discharge aperture and the milk discharge aperture is connected to a foremilk discharge device, the disinfection device is suitable for displacing the steam in a direction from the teat receiving aperture to the milk discharge aperture, in a way in which the steam gets into the milk discharge device. It is thus achieved that the disinfection also comprises the connecting milk line between a teat liner and the foremilk discharge device, and the foremilk discharge device per se. A temperature measuring member at the place where the foremilk discharge device is located measures the temperature of the steam at that place. By feedback of the measured steam temperature to the control unit the heating device of the disinfection device can be controlled in such a way that a desired steam temperature of the steam in the foremilk discharge device is actually achieved. For this purpose, temperature measuring means may also be included in the aforementioned connecting milk line.

In an embodiment of a device, the disinfection device of the milking device comprises a pulsation device for pulsating at any rate at least a part of the teat liner and a control unit for registering values of at least one control parameter for the disinfection device. Said pulsation device makes it possible to vibrate the teat liner at a high pulsation frequency when a disinfecting fluid or cleaning fluid is being brought into contact with at any rate at least a part of the teat liner. The removal of milk and/or other residues on a teat liner surface is promoted in this manner.

Finally, within the context of the inventive idea, as regards the disinfection of at least a part of a teat liner in a milking device by prescribing a temperature of ≥ 95 °C, it is pointed out that an adequate disinfection can also be achieved by direct heating of at any rate at least a part of a teat liner. Control with the aid of temperature measuring means and feedback regulation of a heating device for heating at any rate at least a part of the teat liner are again essential to a safe, successful disinfection. Registration of control parameter values increases the intended disinfection certainty.

The invention will be explained hereinafter in further detail with reference to some embodiments shown in the drawing, in which:
Figure 1 shows schematically a side view of a milking device for automatically milking animals, with a possible embodiment of a disinfection device for disinfecting at any rate at least a part of the teat liner with steam being present therein;
Figure 2 shows schematically the disinfection device of the milking device shown in Figure 1;
Figure 3 shows schematically a possible embodiment of a disinfecting member;
Figure 4 shows schematically one of a plurality of possible embodiments of a disinfection device for disinfecting at any rate at least a part of the teat liner by direct heating.

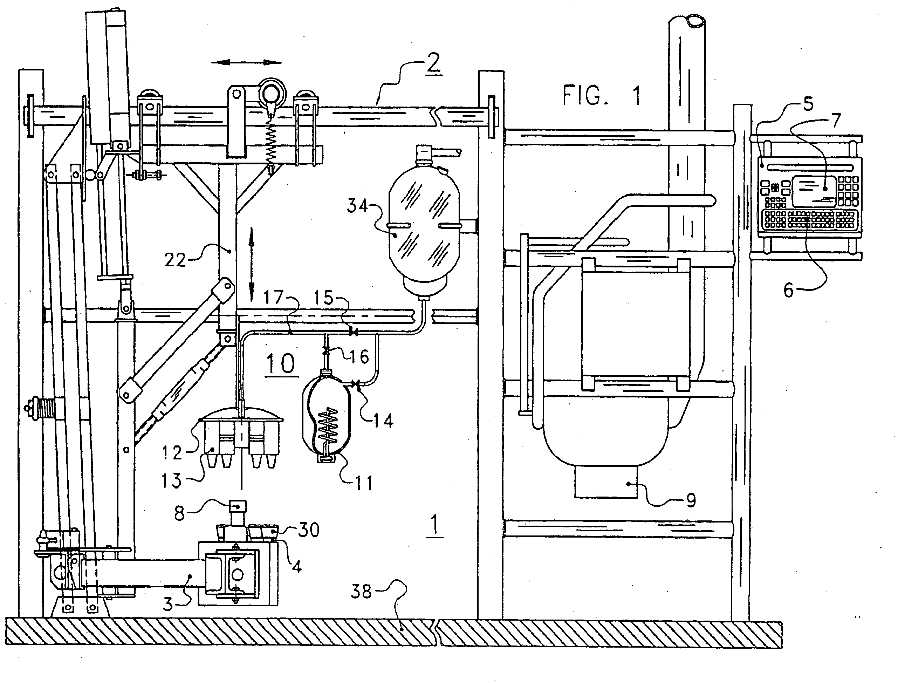

Figure 1 shows schematically a device 1 for automatically milking dairy animals. The device 1 comprises a milking parlour 38 which is surrounded by a fencing 2 that allows a dairy animal, in this embodiment a cow, a limited freedom of movement. The device 1 comprises a robot arm 3 carrying the teat cups 4 to be connected to the teats of the cow. The device 1 is controlled by a control unit 5 that is provided with an input device 6, such as a keyboard, for inputting data and with a screen 7. On the robot arm 3 there is also disposed a teat position measuring device 8 for measuring the position of the teats of a cow. The data obtained by the teat position measuring device 8 are used by the control unit 5 for moving the robot arm 3 in such a way that the teat cups 4 can be connected to the teats. It will be obvious that all kinds of position measuring means 8 known per se, for example lasers, cameras, ultrasonic sensors and the like, may be applied within the scope of the invention. In the embodiment shown, the robot arm 3 carries both the teat cups 4 and the position measuring device 8, but it will be obvious that there may also be applied a robot arm 3 with a gripper for gripping teat cups 4 from a storage space. In an alternative embodiment, the position measuring device 8 may also be arranged on a separate robot arm 3 or even in a fixed position inside or outside the milking parlour 38. There is disposed an animal identification system 9 near the milking parlour 38 for recognizing the identity of an animal present in the milking parlour 38. In the device 1 for automatically milking dairy animals there is included a disinfection device 10.

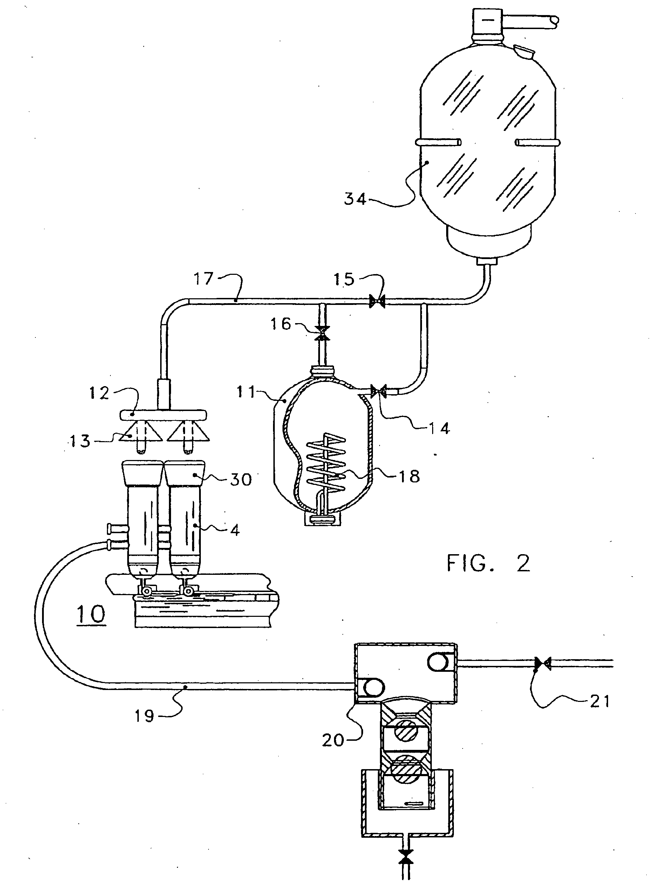

Figure 2 shows schematically the disinfection device 10 of the milking device 1 shown in Figure 1. In the chosen embodiment of the invention, the disinfecting fluid steam is chosen. It is obvious that many other possible fluids and constructive embodiments attuned thereto may be chosen within the scope of the inventive idea. The disinfection device 10 comprises a heating device 11 for heating water to steam having a desired temperature. For disinfecting and cleaning by means of a fluid at any rate at least a part of the teat liners 30 (mounted in the teat cups 4) and the milk transport system (including milk storage vessels) connected thereto, the teat cups 4 are connected to a fluid applying device 12. Said fluid applying device 12 is rigidly fastened to a vertically orientated beam 22 of the milking device 1 and comprises four downwardly orientated disinfecting members 13. After the teat cups 4 have been connected to the disinfecting members 13, the disinfecting members 13 are located in the teat receiving spaces 39 of the individual teat liners 30. The teat receiving space 39 is the space between the teat receiving aperture 36 and the milk discharge aperture 37 of a teat liner 30.

The fluid applying device 12 is connected to a fluid vessel 34 and a heating device 11 via a fluid supply line 17. Said fluid vessel 34 is filled with water. It is also possible to provide each individual disinfecting member 13 with its own supply line and fluid vessel. When valve 15 is in its shut off position, valve 14 is controlled to be opened. Due to this, water is admitted to the heating device 11. Valve 14 and release device 16 are shut off at the moment when a (non-shown) fluid level measuring member detects a particular water level in the heating device 11. Now, a heating element 18 that is located in the heating device 11 heats the water to steam. A valve 21 is included in the fluid discharge line 19. By shutting off valve 21 a short fluid discharge line is obtained. Disinfecting and cleaning can now be started.

First of all disinfecting is started. The release device 16 is controlled to be opened, (valves 15 and 14 in shut off position) so that steam is now conveyed from the heating device 11, via the fluid supply line 17, the fluid applying device 12 and the disinfecting members 13, through the teat liners 30, the fluid discharge line 19 and the foremilk discharge device 20. After a span of time of approximately 3 to 15 seconds, the release device 16 shuts off the release of steam. The valves 14, 15, 21 included in the disinfection device 10 and the release device 16 are automatically controlled by a control unit 5. For this purpose, said control unit 5 is capable of registering values of at least one control parameter for the disinfection device 10. In this embodiment, only the disinfection of a part of the total milking system has been elaborated. It is obvious that steam disinfection is suitable for all the parts of the milking system that have been in contact with the milk yielded. Many constructive embodiments are possible for this purpose.

Subsequently, cleaning by means of a fluid takes place. When valve 14 and release device 16 are shut off and valve 15 is controlled to be opened, water can be conveyed from the fluid vessel 34, through the fluid supply line 17, the fluid applying device 12, the disinfecting members 13, the teat liners 30, the fluid discharge line 19 and the foremilk discharge device 20. The temperature of the water is capable of being regulated. Now, the disinfection device 10 functions as a whole as it were as a cleaning device. The water removes residues that have remained after the disinfection. After the cleaning has been finished, the valve 15 is shut off. Subsequently blowing compressed air into the teat liners 30 (the technical means required for this purpose are not depicted in Figure 2) is a tried and tested means to dry at any rate at least the teat liner surfaces. The temperature of the compressed air is capable of being regulated, if desired. Cleaning and subsequently drying is state of the art.

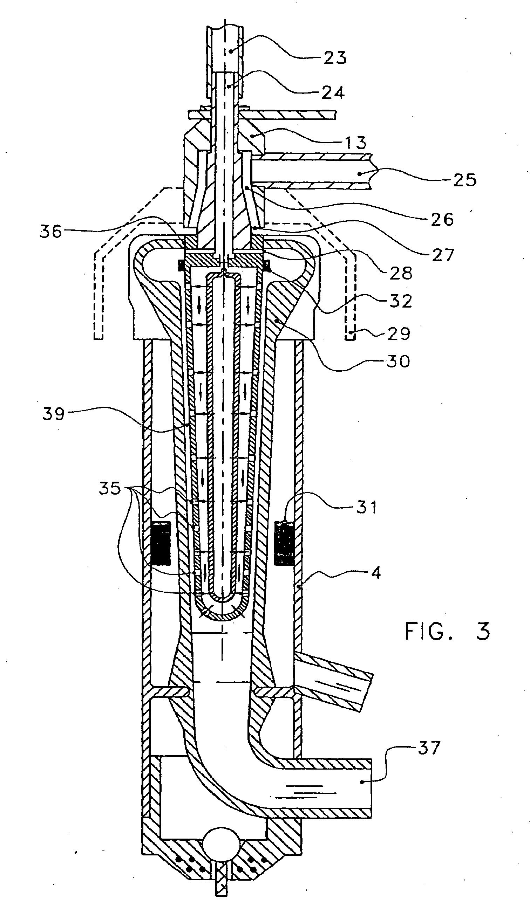

Figure 3 shows schematically a possible embodiment of a disinfecting member 13. Each of the disinfecting members 13 comprises two separated main fluid ducts 24 and 26. Duct 24 extends centrally through a disinfecting member 13 from top to bottom. In said duct 24 there are provided sidewardly orientated first outflow apertures 28 which, when a teat cup 4 is connected to a relevant disinfecting member 13, debouch relatively close below the upper edge of the teat liner 30 that is located in the teat cup 4. In the lower part of the disinfecting member 13 the steam leaves the disinfecting member 13 through the apertures 35, in the directions indicated by arrows. Duct 26 is disposed approximately concentrically relative to duct 24 in the disinfecting member 13 and shows at its lower side an annular outflow aperture 27 that is located in a plane perpendicular to the longitudinal axis of the disinfecting member 13 and the teat cup 4 connected thereto. Duct 24 of each disinfecting member 13 is connected to a supply line 23. Duct 26 of each disinfecting member 13 is connected to a tube element 25, the tube elements 25 of the separate disinfecting members debouching into a distribution element that is connected to a supply line (not shown in Figure 3). By supplying a fluid via the ducts 24 and 26 (or supplying non-identical fluids to the two ducts), the fluid is led, on the one hand, across the upper side of the teat liners 30 of the teat cups 4, whereas, on the other hand, the fluid is brought into the teat liners 30 of the teat cups 4. When the teat cups 4 are connected to the disinfecting members 13, a vacuum is generated in the teat cups 4. This results in that the teat cups 4 are moved upwards to some extent across the lower end of the relevant disinfecting members 13, and in that the outflow aperture 27 in each of the disinfecting members 13 is shut off. Therefore, the distance between the outflow aperture 28 and the outflow aperture 27 is relatively small. Said distance lies for example in the range of 5 mm - 10 mm. When the steam is supplied via the tube element 25 through the duct 26 under increased pressure, the steam leaving the outflow aperture 27 will be pressed between the lower edge of the aperture 27 and the somewhat yielding upper edge of the teat liner 30 into the relevant teat cup 4 and be sprayed in sideward direction. Therefore, the separate disinfecting members 13 are provided with a protecting element 29 covering the upper end of the connected teat cup(s). It is obvious that many embodiments of the disinfecting member 13 are possible. For example, the lower part, provided with a plurality of outflow apertures 35, of the disinfecting member shown in the figure, can be omitted. In that case, steam comes into contact with the teat liner via outflow apertures 27 and 28.

The disinfection device 10 comprises a first temperature measuring member (for example an infrared sensor) 32 (Figure 3) for measuring the temperature of the steam when it is in contact with at any rate at least a part of the teat liner 30. The measured value is sent to the control unit 5. Said control unit 5 comprises an input device 6 for inputting a desired temperature of the steam that is in contact with at any rate at least a part of a teat liner 30. Based on a comparison between the desired temperature value of the steam and the measured temperature value - for that purpose the control unit 5 comprises a comparing device (not shown in Figure 1) - the control unit 5 controls the heating device 11 in such a way that the steam that is in contact with at any rate at least a part of the teat liner 30 will attain the desired temperature. The disinfection per se of the separate teat liners 30 may be influenced inter alia by time-dependent and animal-dependent regulation parameters. This must be understood in the broadest sense of the word. Upon detection of physical and/or chemical abnormalities in milk obtained from a dairy animal by means of a (non-depicted) detection device, the control unit 5 is capable of adapting the disinfection process parameters in an intelligent manner. The disinfection device 10 may further be provided with an additive member for adding an additive to the steam. Of course, adding an additive to the water in the fluid vessel 34 is possible as well.

After at any rate at least a part of a teat liner 30 has been disinfected, the temperature of the heated teat liner 30 has to be actively cooled to a teat liner temperature that is pleasant for an animal to be milked. A second temperature measuring member (for example an infrared sensor) 31 (Figure 3) measures the temperature of at any rate at least a part of the teat liner 30. The measured values are sent to the control unit 5. Said control unit 5 comprises an input device 6 for inputting a desired temperature of at any rate at least a part of the teat liner 30. With the aid of the desired temperature value of at any rate at least a part of the teat liner 30 and the measured temperature value, the control unit 5 controls a cooling device that constitutes part of the disinfection device 10 in such a way that at any rate at least a part of the teat liner 30 will attain the desired temperature. In this context, for example, a vacuum pump or a rinsing installation in which the rinsing fluid is water or air can be taken into consideration. An advantage of applying a vacuum pump as a cooling device lies in the fact that condensate in a teat liner evaporates more quickly as a result of the underpressure effected by the pump. Post-rinsing with cold water has a cleaning and cooling function and forms as such also a cooling device. If desired, a combination of the aforementioned cooling devices and the cooling methods related thereto may be applied. The active cooling per se of the separate teat liners 30 may be influenced on the basis of inter alia time-dependent and animal-dependent regulation parameters.

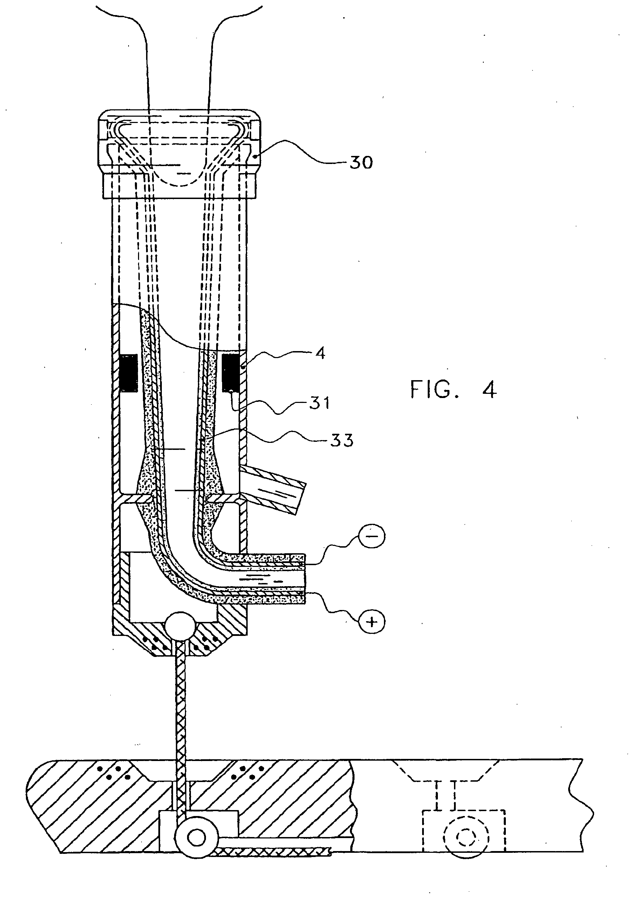

A possible embodiment of a disinfection device for direct heating and thus disinfecting at any rate at least a part of the teat liner 30 is shown in Figure 4. A heating member 33 is included in the teat liner 30. Said heating member 33 consists of a thin layer of electrically conductive material, which is capable of being heated by supply of electric energy. In principle, many unconventional principles are possible for the heating member 33 of the disinfection device. In this context can be taken into consideration, for example, particles in a teat liner 30 that are capable of being heated by electromagnetic radiation, the electromagnetic radiation belonging to the group: microwaves, infrared radiation, visible light and ultraviolet light. It is essential that the heating member 33 is in direct contact or is capable of being brought into direct contact with at any rate at least a part of the teat liner 30. In the latter case, for example, an element which is capable of being heated and which is capable of being brought into a close-fitting shape contact with the teat liner can be taken into consideration. A temperature measuring member (for example an infrared sensor) 31 measures the temperature of at any rate at least a part of the teat liner 30, and sends the measured temperature value to a control unit 5. The control unit 5 comprises an input device 6 for inputting inter alia a desired teat liner temperature. Based on a comparison between the measured teat liner temperature and the desired teat liner temperature, the heating member 33 is controlled in such a way that the desired teat liner temperature is achieved. The heating process is controlled by the control unit 5 which is suitable for registering values of at least one control parameter. The control parameter values enable the control unit 5 to effect a reliable, successful disinfection.

## Claims

1. A method of milking animals and cleaning at least a part of a milking device (1) for milking animals, such as cows, the method comprising the following steps:
- connecting at least one teat cup(4) to a teat of an animal to be milked,
- milking the animal,
- cleaning at least a part of the milking device (1) that has come into contact with the milk from the animal with steam, and
- a further cleaning step comprising treating with a fluid at least that part of the milking device (1) that has been treated with steam, **characterized in that** the very first cleaning step comprises cleaning and/or disinfecting said part of the milking device (1) with steam.

2. A method as claimed in claim 1, **characterized in that** the temperature of the fluid is chosen in such a way that the part of the milking device (1) that has been treated with steam, is cooled by the fluid.

3. A method as claimed in any one of the preceding claims, **characterized in that** the method comprises the step of heating water to steam and the step of bringing the steam into contact with the teat liner (30), and **in that** the step of heating the water to steam comprises the step of heating the steam to such a temperature that the steam has a temperature of at least approximately 95 °C when it is in contact with at any rate at least the teat liner (30).

4. A method as claimed in any one of the preceding claims, **characterized in that the** method comprises the step of heating water to steam and the step of bringing the steam Into contact with the teat liner (30), and **in that** the step of heating the water to steam comprises the step of heating the steam to such a temperature that at any rate at least a part of the teat liner (30) is capable of being heated by the steam to a temperature of at least approximately 95 °C.

5. A method as claimed in any one of the preceding claims, **characterized in that** the method comprises the step of heating water to steam and the step of bringing the steam into contact with the teat liner (30), and **in that** the step of heating the water to steam comprises the step of heating the steam to such a temperature that the steam has a temperature between approximately 100 °C and approximately 150 °C when the steam is in contact with at any rate at least a part of the teat liner (30).

6. A method as claimed in any one of the preceding claims, **characterized In that** the method comprises the step of heating water to steam and the step of bringing the steam into contact with the teat liner (30), and **in that** the step of heating the water to steam comprises the step of heating the steam to such a temperature that at any rate at least a part of the teat liner (30) is capable of being heated by the steam to a temperature between approximately 100 °C and approximately 150 °C.

7. A method as claimed in any one of the preceding claims, the milking device (1) comprising a disinfection device (10) with a heating device (11) for heating water to steam, the disinfection device being suitable for bringing the steam into contact with a teat liner (30), and the milking device (1) comprising a control unit (5) which is suitable for controlling the disinfection device (10), **characterized in that** the method comprises the step of controlling the disinfection device (10) with the aid of a first regulation parameter.

8. A method as claimed in claim 7, the first regulation parameter being a control parameter, **characterized in that** the method comprises the step of registering values of at least one control parameter for the disinfection device (10).

9. A method as claimed in claim 8, **characterized in that** the control parameter is the duration of operation, and **in that** the method comprises the step of putting the disinfection device (10) into operation by the control unit (5).

10. A method as claimed in any one of claims **8** or **9, characterized in that** the control parameter is the amount of steam, and **in that** the method comprises the step of putting the disinfection device (10) into operation by the control unit (5).

11. A method as claimed in any of the claims 7-10, **characterized in that** the method comprises the step of actively cooling at any rate at least a part of the teat liner (30).

12. A method as claimed in any one of claims 7 to 11, referring to claim 7, **characterized in that** the method comprises the step of controlling the disinfection device (10) with the aid of a second regulation parameter.

13. A method as claimed in any one of claims 7 to 12, **characterized in that** the method comprises the step of measuring the temperature of the steam that temperature of the steam that is in contact with at any rate at least a part of the teat liner (30), the step of generating a first temperature signal that is indicative of the measured steam temperature, and the step of supplying the first temperature signal to the control unit (5).

14. A method as claimed In any of claims 7 to 13, **characterized in that** the method comprises the step of measuring the temperature of at any rate at least a part of the teat liner (30), the step of generating a second temperature signal that is indicative of the measured teat liner (30) temperature, and the step of supplying the second temperature signal to the control unit (5).

15. A method as claimed in any one of claims 13 to 14, with reference to claim 12, **characterized in that** the method comprises the step of controlling, with the aid of a desired steam temperature of the steam that is in contact with the teat liner (30), the heating device (11) for heating the steam in such a way that the steam that is in contact with at any rate at least a part of the teat liner (30) is capable of being heated to the desired steam temperature.

16. A method as claimed in any of claims 13 to 15, with reference to claim 12, **characterized in that** the method comprises the step of controlling, with the aid of a desired teat liner (30) temperature of the part of a teat liner (30) that is in contact with the steam, the heating device (11) for heating the steam in such a way that at least the part of the teat liner (30) that is in contact with the steam is capable of being heated to the desired teat liner (30) temperature.

17. A method as claimed in any one of the preceding claims, **characterized in that the** method comprises the step of automatically connecting a teat cup (4) to a teat of a dairy animal by means of a robot arm (3).

18. A method as claimed In claims 14 and 17, **characterized in that** the method comprises the step of controlling the robot arm (3) for automatically connecting a teat cup (4) to a teat of a dairy animal when a parameter value comes below an adjustable threshold value for the second temperature signal and the disinfection device (10) is out of operation.

19. A method as claimed in claim 18, **characterized in that** the threshold value for the second temperature signal is approximately 40 °C.

## Patentansprüche

1. Verfahren zum Melken von Tieren und Reinigen zumindest eines Teiles einer Melkvorrichtung (1) zum Melken von Tieren, wie z. B. Kühen, wobei das Verfahren die folgenden Schritte umfasst:
- Anschließen mindestens eines Zitzenbechers (4) an eine Zitze eines zu melkenden Tieres,
- Melken des Tieres,
- Reinigen mit Dampf zumindest eines Teiles der Melkvorrichtung (1), der mit der Milch von dem Tier in Kontakt gekommen ist und
- einen weiteren Reinigungsschritt einschließlich des Behandelns mit einem Fluid zumindest desjenigen Teiles der Melkvorrichtung (1), der mit Dampf behandelt wurde,
**dadurch gekennzeichnet, dass** der allererste Reinigungsschritt das Reinigen und/oder Desinfizieren dieses Teiles der Melkvorrichtung (1) mit Dampf umfasst.

2. Verfahren nach Anspruch 1,
**dadurch gekennzeichnet, dass** die Temperatur des Fluids so gewählt ist, dass der Teil der Melkvorrichtung (1), der mit Dampf behandelt wurde, durch das Fluid gekühlt wird.

3. Verfahren nach einem der vorhergehenden Ansprüche,
**dadurch gekennzeichnet, dass** das Verfahren den Schritt des Erhitzens von Wasser zu Dampf und den Schritt des Inkontaktbringens des Dampfes mit der Zitzenbecherauskleidung (30) umfasst, und dass der Schritt des Erhitzens des Wassers zu Dampf den Schritt des Erhitzens des Dampfes auf eine solche Temperatur umfasst, dass der Dampf eine Temperatur von mindestens annähernd 95°C aufweist, wenn er jedenfalls zumindest mit der Zitzenbecherauskleidung (30) in Kontakt steht.

4. Verfahren nach einem der vorhergehenden Ansprüche,
**dadurch gekennzeichnet, dass** das Verfahren den Schritt des Erhitzens von Wasser zu Dampf und den Schritt des Inkontaktbringens des Dampfes mit der Zitzenbecherauskleidung (30) umfasst, und dass der Schritt des Erhitzens des Wassers zu Dampf den Schritt des Erhitzens des Dampfes auf eine solche Temperatur umfasst, dass jedenfalls zumindest ein Teil der Zitzenbecherauskleidung (30) durch den Dampf auf eine Temperatur von mindestens annähernd 95°C erhitzt werden kann.

5. Verfahren nach einem der vorhergehenden Ansprüche,
**dadurch gekennzeichnet, dass** das Verfahren den Schritt des Erhitzens von Wasser zu Dampf und den Schritt des Inkontaktbringens des Dampfes mit der Zitzenbecherauskleidung (30) umfasst, und dass der Schritt des Erhitzens des Wassers zu Dampf den Schritt des Erhitzens des Dampfes auf eine solche Temperatur umfasst, dass der Dampf eine Temperatur zwischen ungefähr 100°C und ungefähr 150°C aufweist, wenn der Dampf jedenfalls zumindest mit einem Teil der Zitzenbecherauskleidung (30) in Kontakt steht.

6. Verfahren nach einem der vorhergehenden Ansprüche,
**dadurch gekennzeichnet, dass** das Verfahren den Schritt des Erhitzens von Wasser zu Dampf und den Schritt des Inkontaktbringens des Dampfes mit der Zitzenbecherauskleidung (30) umfasst, und dass der Schritt des Erhitzens des Wassers zu Dampf den Schritt des Erhitzens des Dampfes auf eine solche Temperatur umfasst, dass jedenfalls zumindest ein Teil der Zitzenbecherauskleidung (30) durch den Dampf auf eine Temperatur zwischen ungefähr 100°C und ungefähr 150°C erhitzt werden kann.

7. Verfahren nach einem der vorhergehenden Ansprüche, wobei die Melkvorrichtung (1) eine Desinfektionsvorrichtung (10) mit einer Heizvorrichtung (11) zum Erhitzen von Wasser zu Dampf umfasst, wobei die Desinfektionsvorrichtung geeignet ist, den Dampf in Kontakt mit einer Zitzenbecherauskleidung (30) zu bringen, und wobei die Melkvorrichtung (1) eine Steuereinheit (5) umfasst, die geeignet ist, die Desinfektionsvorrichtung (10) zu steuern,
**dadurch gekennzeichnet, dass** das Verfahren den Schritt des Steuerns der Desinfektionsvorrichtung (10) mit Hilfe eines ersten Regelungsparameters umfasst.

8. Verfahren nach Anspruch 7, wobei der erste Regelungsparameter ein Steuerparameter ist,
**dadurch gekennzeichnet, dass** das Verfahren den Schritt des Registrierens von Werten zumindest eines Steuerparameters für die Desinfektionsvorrichtung (10) umfasst.

9. Verfahren nach Anspruch 8,
**dadurch gekennzeichnet, dass** der Steuerparameter die Dauer des Betriebs ist, und dass das Verfahren den Schritt des Inbetriebsetzens der Desinfektionsvorrichtung (10) durch die Steuereinheit (5) umfasst.

10. Verfahren nach einem der Ansprüche 8 oder 9,
**dadurch gekennzeichnet, dass** der Steuerparameter die Menge des Dampfes ist, und dass das Verfahren den Schritt des Inbetriebsetzens der Desinfektionsvorrichtung (10) durch die Steuereinheit (5) umfasst.

11. Verfahren nach einem der Ansprüche 7 bis 10,
**dadurch gekennzeichnet, dass** das Verfahren den Schritt des aktiven Kühlens jedenfalls zumindest eines Teiles der Zitzenbecherauskleidung (30) umfasst.

12. Verfahren nach einem der Ansprüche 7 bis 11 unter Rückbezug auf Anspruch 7,
**dadurch gekennzeichnet, dass** das Verfahren den Schritt des Steuerns der Desinfektionsvorrichtung (10) mit Hilfe eines zweiten Regelungsparameters umfasst.

13. Verfahren nach einem der Ansprüche 7 bis 12,
**dadurch gekennzeichnet, dass** das Verfahren den Schritt des Messens der Temperatur des Dampfes umfasst, der Temperatur des Dampfes, der jedenfalls zumindest mit einem Teil der Zitzenbecherauskleidung (30) in Kontakt steht, den Schritt des Erzeugens eines ersten Temperatursignals, das die gemessene Dampftemperatur anzeigt, und den Schritt des Zuführens des ersten Temperatursignals zu der Steuereinheit (5).

14. Verfahren nach einem der Ansprüche 7 bis 13,
**dadurch gekennzeichnet, dass** das Verfahren den Schritt des Messens der Temperatur jedenfalls zumindest eines Teiles der Zitzenbecherauskleidung (30) umfasst, den Schritt des Erzeugens eines zweiten Temperatursignals, das die gemessene Temperatur der Zitzenbecherauskleidung (30) anzeigt, und den Schritt des Zuführens des zweiten Temperatursignals zu der Steuereinheit (5).

15. Verfahren nach einem der Ansprüche 13 bis 14 unter Rückbezug auf Anspruch 12,
**dadurch gekennzeichnet, dass** das Verfahren den Schritt des Steuerns, und zwar mit Hilfe einer gewünschten Dampftemperatur des mit der Zitzenbecherauskleidung (30) in Kontakt stehenden Dampfes, der Heizvorrichtung (11) umfasst, die den Dampf derart erhitzt, dass der Dampf, der jedenfalls zumindest mit einem Teil der Zitzenbecherauskleidung (30) in Kontakt steht, auf die gewünschte Dampftemperatur erhitzt werden kann.

16. Verfahren nach einem der Ansprüche 13 bis 15 unter Rückbezug auf Anspruch 12,
**dadurch gekennzeichnet, dass** das Verfahren den Schritt des Steuerns, und zwar mit Hilfe einer gewünschten Temperatur der Zitzenbecherauskleidung (30) des mit dem Dampf in Kontakt stehenden Teiles einer Zitzenbecherauskleidung (30), der Heizvorrichtung (11) umfasst, die den Dampf derart erhitzt, dass zumindest der Teil der Zitzenbecherauskleidung (30), der mit dem Dampf in Kontakt steht, auf die gewünschte Temperatur der Zitzenbecherauskleidung (30) erhitzt werden kann.

17. Verfahren nach einem der vorhergehenden Ansprüche,
**dadurch gekennzeichnet, dass** das Verfahren den Schritt des automatischen Anschließens eines Zitzenbechers (4) an eine Zitze eines milchgebenden Tieres mit Hilfe eines Roboterarmes (3) umfasst.

18. Verfahren nach den Ansprüchen 14 und 17,
**dadurch gekennzeichnet, dass** das Verfahren den Schritt des Steuerns des Roboterarmes (3) zum automatischen Anschließen eines Zitzenbechers (4) an eine Zitze eines milchgebenden Tieres umfasst, wenn ein Parameterwert einen einstellbaren Grenzwert für das zweite Temperatursignal unterschreitet und die Desinfektionsvorrichtung (10) außer Betrieb ist.

19. Verfahren nach Anspruch 18,
**dadurch gekennzeichnet, dass** der Grenzwert für das zweite Temperatursignal etwa 40°C beträgt.

## Revendications

1. Procédé pour la traite d'animaux et le nettoyage d'au moins une partie d'un dispositif de traite (1) pour traire des animaux, tel que des vaches, le procédé comprenant les étapes suivantes :
- raccorder au moins un gobelet trayeur (4) à un trayon d'un animal destiné à être trait,
- traire l'animal,
- nettoyer au moins une partie du dispositif de traite (1) qui est entrée en contact avec le lait à partir de l'animal avec de la vapeur d'eau, et
- une étape de nettoyage supplémentaire comprenant le traitement avec un liquide d'au moins la partie du dispositif de traite (1) qui a été traitée avec de la vapeur d'eau,
**caractérisé en ce que** la toute première étape de nettoyage comprend le nettoyage et/ou la désinfection de ladite partie du dispositif de traite (1) avec de la vapeur d'eau.

2. Procédé selon la revendication 1, **caractérisé en ce que** la température du liquide est choisie de telle manière que la partie du dispositif de traite (1) qui a été traitée avec de la vapeur d'eau est refroidie par le liquide.

3. Procédé selon l'une quelconque des revendications précédentes, **caractérisé en ce que** le procédé comprend l'étape de chauffage de l'eau pour obtenir de la vapeur d'eau et l'étape de mise en contact de la vapeur d'eau avec le manchon trayeur (30), et **en ce que** l'étape de chauffage de l'eau pour obtenir de la vapeur d'eau comprend l'étape de chauffage de la vapeur d'eau jusqu'à une température telle que la vapeur d'eau possède une température d'au moins approximativement 95 °C lorsqu'elle est en contact avec en tout cas au moins le manchon trayeur (30).

4. Procédé selon l'une quelconque des revendications précédentes, **caractérisé en ce que** le procédé comprend l'étape de chauffage de l'eau pour obtenir de la vapeur d'eau et l'étape de mise en contact de la vapeur d'eau avec le manchon trayeur (30), et **en ce que** l'étape de chauffage de l'eau pour obtenir de la vapeur d'eau comprend l'étape de chauffage de la vapeur d'eau jusqu'à une température telle qu'en tout cas au moins une partie du manchon trayeur (30) soit en mesure d'être chauffée par la vapeur d'eau jusqu'à une température d'au moins approximativement 95 °C.

5. Procédé selon l'une quelconque des revendications précédentes, **caractérisé en ce que** le procédé comprend l'étape de chauffage de l'eau pour obtenir de la vapeur d'eau et l'étape de mise en contact de la vapeur d'eau avec le manchon trayeur (30), et **en ce que** l'étape de chauffage de l'eau pour obtenir de la vapeur d'eau comprend l'étape de chauffage de la vapeur d'eau jusqu'à une température telle que la vapeur d'eau possède une température comprise entre approximativement 100 °C et approximativement 150 °C lorsque la vapeur d'eau est en contact avec en tout cas au moins une partie du manchon trayeur (30).

6. Procédé selon l'une quelconque des revendications précédentes, **caractérisé en ce que** le procédé comprend l'étape de chauffage de l'eau pour obtenir de la vapeur d'eau et l'étape de mise en contact de la vapeur d'eau avec le manchon trayeur (30), et **en ce que** l'étape de chauffage de l'eau pour obtenir de la vapeur d'eau comprend l'étape de chauffage de la vapeur d'eau jusqu'à une température telle qu'en tout cas au moins une partie du manchon trayeur (30) soit en mesure d'être chauffée par la vapeur d'eau jusqu'à une température comprise entre approximativement 100 °C et approximativement 150 °C.

7. Procédé selon l'une quelconque des revendications précédentes, le dispositif de traite (1) comprenant un dispositif de désinfection (10) avec un dispositif de chauffage (11) pour chauffer de l'eau pour obtenir de la vapeur d'eau, le dispositif de désinfection étant approprié pour mettre la vapeur d'eau en contact avec un manchon trayeur (30), et le dispositif de traite (1) comprenant une unité de commande (5) qui est appropriée pour commander le dispositif de désinfection (10), **caractérisé en ce que** le procédé comprend l'étape de commande du dispositif de désinfection (10) à l'aide d'un premier paramètre de régulation.

8. Procédé selon la revendication 7, le premier paramètre de régulation étant un paramètre de commande, **caractérisé en ce que** le procédé comprend l'étape d'enregistrement des valeurs d'au moins un paramètre de commande pour le dispositif de désinfection (10).

9. Procédé selon la revendication 8, **caractérisé en ce que** le paramètre de commande est la durée de fonctionnement, et **en ce que** le procédé comprend l'étape de mise en fonctionnement du dispositif de désinfection (10) par l'intermédiaire de l'unité de commande (5).

10. Procédé selon l'une quelconque des revendications 8 ou 9, **caractérisé en ce que le** paramètre de commande est la quantité de vapeur d'eau, et **en ce que** le procédé comprend l'étape de mise en fonctionnement du dispositif de désinfection (10) par l'intermédiaire de l'unité de commande (5).

11. Procédé selon l'une quelconque des revendications 7 à 10, **caractérisé en ce que** le procédé comprend l'étape de refroidissement actif d'en tout cas au moins une partie du manchon trayeur (30).

12. Procédé selon l'une quelconque des revendications 7 à 11, en faisant référence à la revendication 7, **caractérisé en ce que** le procédé comprend l'étape de commande du dispositif de désinfection (10) à l'aide d'un second paramètre de régulation.

13. Procédé selon l'une quelconque des revendications 7 à 12, **caractérisé en ce que** le procédé comprend l'étape de mesure de la température de la vapeur d'eau qui est en contact avec en tout cas au moins une partie du manchon trayeur (30), l'étape de génération d'un premier signal de température qui est indicatif de la température mesurée de vapeur d'eau, et l'étape fournissant le premier signal de température à l'unité de commande (5).

14. Procédé selon l'une quelconque des revendications 7 à 13, **caractérisé en ce que** le procédé comprend l'étape de mesure de la température d'en tout cas au moins une partie du manchon trayeur (30), l'étape de génération d'un second signal de température qui est indicatif de la température mesurée de manchon trayeur (30), et l'étape fournissant le second signal de température à l'unité de commande (5).

15. Procédé selon l'une quelconque des revendications 13 et 14, en faisant référence à la revendication 12, **caractérisé en ce que** le procédé comprend l'étape de commande, à l'aide d'une température souhaitée de vapeur d'eau de la vapeur d'eau qui est en contact avec le manchon trayeur (30), le dispositif de chauffage (11) pour chauffer la vapeur d'eau de manière telle que la vapeur d'eau qui est en contact avec en tout cas au moins une partie du manchon trayeur (30) soit en mesure d'être chauffée jusqu'à la température souhaitée de vapeur d'eau.

16. Procédé selon l'une quelconque des revendications 13 à 15, en faisant référence à la revendication 12, **caractérisé en ce que** le procédé comprend l'étape de commande, à l'aide d'une température souhaitée de manchon trayeur (30) de la partie d'un manchon trayeur (30) qui est en contact avec la vapeur d'eau, le dispositif de chauffage (11) pour chauffer la vapeur d'eau de manière telle qu'au moins la partie du manchon trayeur (30) qui est en contact avec la vapeur d'eau soit en mesure d'être chauffée jusqu'à la température souhaitée de manchon trayeur (30).

17. Procédé selon l'une quelconque des revendications précédentes, **caractérisé en ce que** le procédé comprend l'étape de raccordement automatique d'un gobelet trayeur (4) à un trayon d'un animal laitier au moyen d'un bras robotisé (3).

18. Procédé selon les revendications 14 et 17, **caractérisé en ce que** le procédé comprend l'étape de commande du bras robotisé (3) pour raccorder automatiquement un gobelet trayeur (4) à un trayon d'un animal laitier lorsqu'une valeur de paramètre se trouve en dessous d'une valeur seuil réglable pour le second signal de température et le dispositif de désinfection (10) est hors de fonctionnement.

19. Procédé selon la revendication 18, **caractérisé en ce que** la valeur seuil pour le second signal de température est approximativement 40 °C.
